# EUROPEAN PATENT APPLICATION

(11) **EP 2 428 677 A1**
(43) Date of publication of application: **14.03.2012**
(21) Application number: 10772174.8
(22) Date of filing: 06.05.2010
(51) Int. Cl.: F03D 3/06, F03D 11/04

(54) **VERTICAL AXIS WIND TURBINE DEVICE**

(30) Priority: 08.05.2009 JP 2009002962 U; 15.09.2009 JP 2009213186; 15.09.2009 JP 2009213215; 11.03.2010 JP 2010054763
(71) Applicant: Ueno, Yasuo, Kawasaki-shi, Kanagawa 213-0033 (JP)
(72) Inventor: Ueno, Yasuo, Kawasaki-shi, Kanagawa 213-0033 (JP)
(74) Representative: TER MEER - STEINMEISTER & PARTNER GbR
(86) International application number: PCT/JP2010/057745
(87) International publication number: WO 2010/128656

(57) **Abstract**

This invention provides a vertical axis wind turbine for utilization of wind power for electric generator and mechanical power source which enables big reduction of noise, by supporting a guide vane which section are wing section of aircraft shape to a rotation axis freely for rotation to reduce noise especially when in a condition of strong wind is blowing, by arranging a fixing mechanism to fix the guide vane, and rotors when they become parallel to each other, by adding mechanism to pull down all the wind turbine devices to bottom of a pole-like support, by arranging silencer mechanism composed of flexible member at trailing edge.

## Description

### TECHNICAL FIELD

This invention relates to countermeasure against noise of a wind turbine device used for a wind power electric generator device, a mechanical power source, etc, especially relates to a vertical axis wind turbine which the rotation axis is in vertical direction and can rotate unrelated to direction of wind.

### BACKGROUND ART

So far, many improvements have been progressed for above wind turbine device which merits is that it is not affected by direction of wind. However, practical use of that has been delayed by unstable starting characteristics.
However a following patent application by this patent applicant improved starting characteristics and practical use of that has progressed considerably. This wind turbine device of the patent application consists of structure which constant section and plural rotary wings of substantially formed into a U shape which is falling sidelong (hereinafter "U shape") are fixed to a rotation axis which is supported on a base upwardly and freely for rotation, and at the leading edge of the rotor, plural partition plates which are fixed perpendicular to the leading edge of the rotor and inclined in thickness direction and curved plates are fixed between the partition - so-called slat structure, which both starting performance and high speed rotation function are enabled. And as the rotor is substantially "U shape" and a constant section, it is possible to manufacture by extrusion molding with low cost, moreover as upper and lower end of conventional vertical axis wind turbine is changed to connect to stay which is "U shape", it prevents generation of wing tip vortex, and enables big improvement of performance.

### Prior Art Document

### Patent Document

[Patent Document 1]
   Japanese Patent Application No. 2008-192999

### DISCLOSURE OF THE INVENTION

### Problems to be Solved by the Invention

This invention is to be established under above background, and the theme of the invention is to reduce the noise generated by this wind turbine device in a condition of strong wind is blowing. Means for solving the Problems

The 1st means of this invention, is to provide vertical a axis wind turbine which the axis is supported on a base upwardly and freely for rotation, and the rotation axis which support plural rotors substantially "U shape", and on the rotation axis a guide vane which section is like a wing section attached freely for rotation. This is the guide vane for changing the surrounding turbulent flow of a vertical axis into laminar flow.

The 2nd means of this invention is to provide a vertical axis wind turbine which equips connecting mechanism to fix the rotation angle of the guide vane and plural rotors, to fix rotation angle of the guide vane and plural rotors combine to be parallel.

The 3rd means of this invention is to provide a vertical axis wind turbine which equips a trailing edge fin made of elastic and soft material on the trailing edge of the above rotor.

The 4th means of this invention is to provide a vertical axis wind turbine which base of above wind turbine structure is fitted on a pole-like support, which is possible to slide upward and downward, and a pulley is installed on the upper portion of the pole-like support, and possible to slide above wind turbine upward and downward by pulling a wire hang on a pulley.

The purpose of structure of 5th means of this invention is to provide a vertical axis wind turbine which plural partition perpendicular to a leading edge of a rotor are arranged inclined to section one after the other at the leading edge of the rotor substantially "U shape" that has symmetrical wing section, and plural curved plates which form so-called slat are arranged in the wing thickness direction one after the other, form shape of the fluid inlet shorter in span direction and longer in the cord direction, form shape of the fluid outlet longer in the span direction and shorter in the thickness direction, and near by the fluid outlet an open and close plate member is installed.

### Effects of the Invention

The 1st effect of this invention is that by installing a guide vane which section is like a wing section shape on a rotation axis freely for rotation, possible to reduce turbulence of wind caused by the rotation axis, prevent reduction of rotor performance and generation of noise.

The 2nd effect of this invention is the guide vane stream to wind direction - so-called vane effect, and when wind turbine is stopped in a condition of strong wind, it enables to reduce drag minimum by fixing the direction of the chord parallel to wind direction and reduce wind noise minimum.

The 3rd effect of this invention is that it prevents noise - so-called wind noise, generated at the trailing edge of the rotor, and prevents resonance of the rotor by turbulence of air flow.

The 4th effect of this invention is that to be possible to avoid a excessive wind pressure which add to all devices including a pole-like support by pulling down base of the wind turbine to the bottom of the pole-like support where wind velocity is relatively low, and prevent damage or failure, and prevent noise generated by wind beating all the wind turbine devices that travel long distance.

The 5th effect of this invention is to obtain safe revolution control in a condition of strong wind is blowing by achieving extremely effective braking ability by a plate member which is possible to open and close near by the slat for starting performance, and by this restrict excessive the rotation speed, and it is possible to prevent noise generated under the above condition.

### BRIEF DESCRIPTION OF THE DRAWINGS

[FIG.1] Side Section View of the 1st practiced embodiment of this invention
[FIG.2] A-A Section View of the 1st practiced embodiment of this invention
[FIG.3] B-B Section View of the 1st practiced embodiment of this invention
[FIG.4] Side Section View of the 2nd practiced embodiment of this invention
[FIG.5] Section View of the 3rd practiced embodiment of this invention
[FIG.6] Side Section View of the 4th practiced embodiment of this invention
[FIG.7] Section View of the 5th practiced embodiment of this invention
[FIG.8] Partial Side View of Main Shape of the 5th practiced embodiment of this invention
[FIG.9] Partial Side View of Main Shape of the 5th practiced embodiment of this invention

### MODE FOR CARRYING OUT THE INVENTION

Structure of 1st means and 2nd means of this invention is a vertical axis wind turbine which a guide vane of wing section shape is supported on a rotation axis freely for rotation, preferably a guide vane is hollow structure or light weight structure made of foamed plastics, which is supported on a rotation axis with bearing, etc, that enables smooth rotation. And by installing plural above wind turbine structures in the axis direction, effects of this invention become bigger. In addition, by structure described later, the chord of the rotor and the guide vane are arranged to be able to combine at the angle of rotation parallel to wind.

### Embodiment 1

The 1st embodiment of this invention in the following figures is explained as follows.

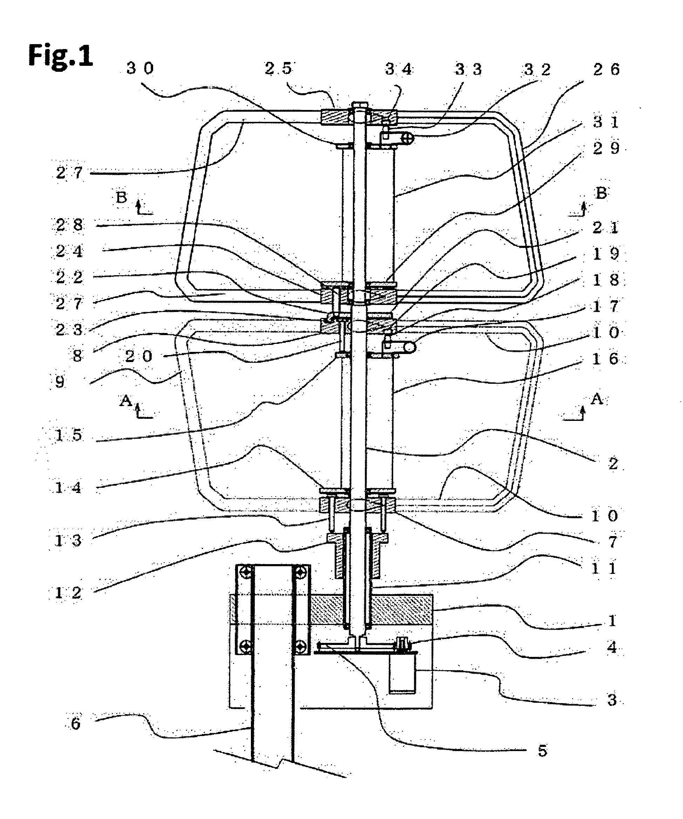

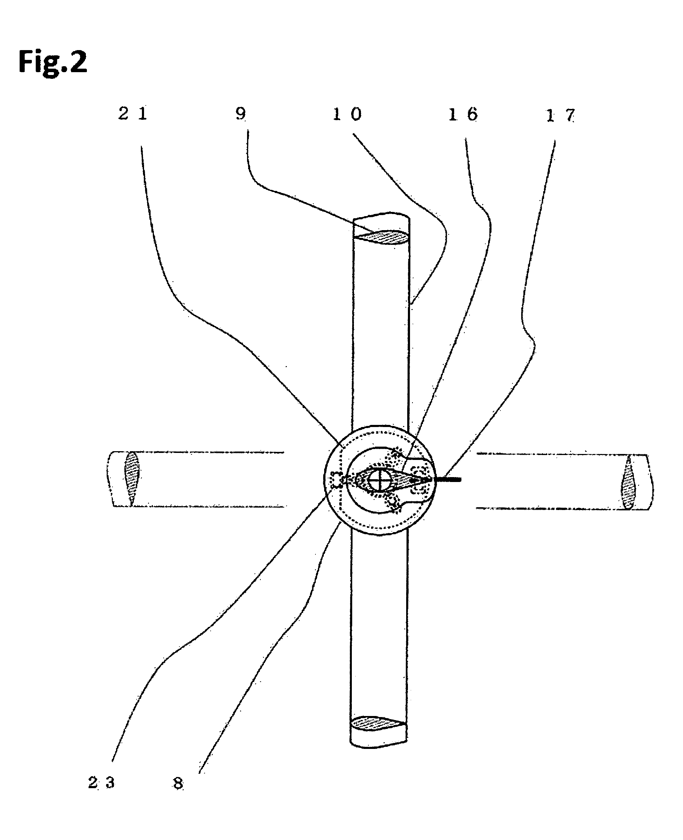

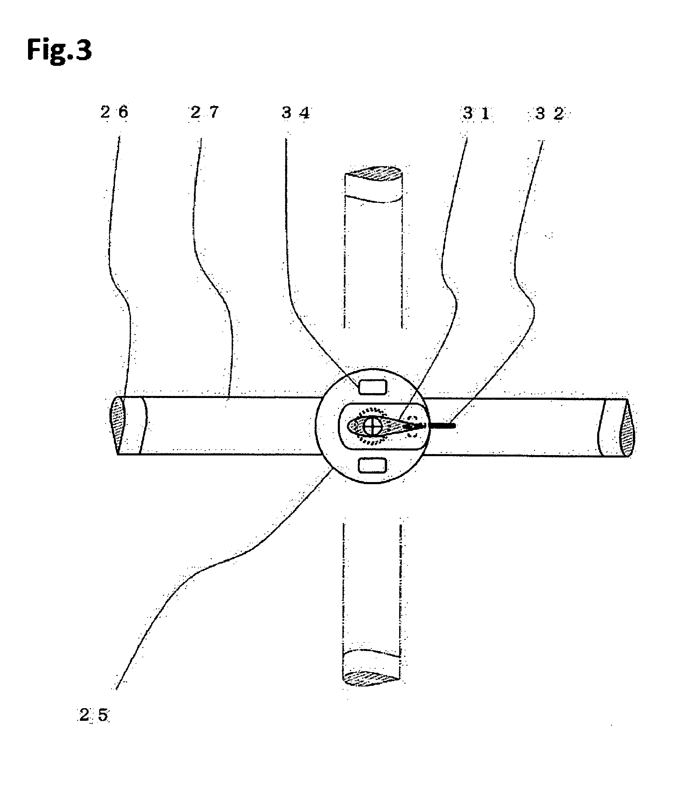

FIG. 1 is the side section view of the 1st practiced embodiment of this invention, FIG. 2 is the A-A section view of this invention and Fig 3 is the B-B section view of this invention.
In FIG. 1, a base 1 support a rotation axis 2 freely for rotation which is vertical to horizon, a electric generator 3 is fixed to the base 1, and the rotation axis 2 is engaged with the electric generator 3 through speed up gears 4, 5 which are arranged at the bottom of the rotation axis 2. 2 hubs 7, 8 are fixed to the rotation axis 2, and 2 rotors 9 and support arms 10 are fixed tightly in substantially "U shape" condition. And on outside diameter of a support pipe 11 of the rotation axis 2, a flange member 12 is arranged freely for sliding upward and downward, and 1st Pin 13 which a penetrate hub 7 contact upper surface of the flange member 12.
Between the hub 7 and 8, a guide vane member 16 which plates 14, 15 are fixed at the top and the bottom end is arranged on the rotation axis 2 freely for rotation and arranged freely for sliding upward and downward. Rotation center of a guide vane 16 is located at the leading edge, and accordingly the leading edge always turns to windward - so-called vane effect. And the guide vane 16 is the lightweight hollow or internal porous structure, and the section shape is rounded leading edge and sharp trailing edge which is similar to wing section of aircraft. A spring 17 is fitted to the plate 15, and a roller 18 is fitted to the spring 17 freely for rotation, and when it is fitted in a hollow 19 which is arranged on the lower surface of the hub 8, it is possible to fix position of rotation when the chord of the rotor 9 and the guide vane 16 becomes parallel. and the second pin 20 which is arranged in the hub 8 freely for sliding contact to the hook a plate 21 at the top of the pin 20, hook 22 is formed on the hook plate 21, and it fit with a hollow 23 arranged on upper surface of the hub 8, and it fix position of rotation of the hub 8 and the hook plate 21. In addition, the hubs 24, 25 are arranged on the rotation axis 2 freely for rotation, and 2 rotors 26 and support arms 27 are fixed to the hub 24, 25 in substantially formed into a "U shape". The 3rd pin 28 which is arranged on the hub 24 freely to slide upward and downward is fixed to the hook plate 21 at the bottom end, and fix rotation position of the hook plate 21 and the hub 24. Under this condition, the rotors 9 and 26 are fixed to each other by 90 degrees phase difference. Between the hub 24 and 25, a guide vane 31 which plates 29, 30 are fixed at the top and bottom end is arranged on the rotation axis 2 freely for rotation and freely for sliding upward and downward. The rotation center of the guide vane 31 is located at the leading edge of it, and accordingly the leading edge of it always turns to windward - so-called vane effect.
And the guide vane 31 is the lightweight hollow or internal porous structure, and the section shape of the guide vane 31 is rounded leading edge and sharp trailing edge similar to wing section of aircraft. A spring 32 is fitted to the plate 30, and a roller 33 is fitted to the spring 32 freely for rotation, and when it is fitted in a hollow 34 which is arranged on the lower surface of the hub 25, it is possible to fix position of rotation when Chord of the rotor 26 and the guide vane 31 become parallel.

Dashed line in FIG. 2 and FIG.3 show 90 degrees rotated from indicated position of FIG. 1, and if wind direction is from left to right, continuous line in FIG. 2 shows stopped condition, and dashed line in FIG. 3 shows stopped condition. Yet, to improve starting characteristics additional member as slat, etc are necessary for rotors 9, 25, but detail is explained later. And the 1st pin 13, the 2nd pin20 and the 3rd pin28 is one each in FIG. 1, however it is preferable to arrange plural pins at periphery of the rotary axis.

Operations of this invention in FIGS.1, 2, 3 are explained as follows. Condition in FIG.1 shows the rotor 9, which is fixed to the rotary axis 2 through the hubs 7, 8, is rotating by the power of wind. The rotor 26 is rotating by power of wind under the condition of the fitting hollow 23 of the hub 23 and the hook 22 of the hook plate 21, the hook plate 21 and the 3^{rd} pin 28 and the hub 24, and rotation position fixed at phase difference 90 degrees to each other. FIG. 2 and FIG.3 show this is the condition that the rotor 9 and the rotor 26 keep 90 degrees phase difference of each other. If wind the direction is from left to right, this phase 90 degrees different condition enables continuous rotation under small torque unevenness.

By lifting upward the flange member 12 which is arranged freely to slide upward and downward on outside diameter of the support pipe, using lever which is not shown in the figure, the 1st pin 13 push the plate 14 from the bottom through the hub 7, and move the guide vane 16 upward. By this movement, the roller 18 located on the plate 15 once touch the lower surface of the hub 8 by the operation of the spring17, rotate and fit in the hollow 19 arranged on the lower surface of the hub 19, the hub 8 and the guide vane 16 are unified and rotate around the rotation axis 2. In addition to it, the 2nd pin 20 push up the plate 21 at the top of it and release fitting of the hook 22 of the hook plate 2 and the hollow 23 arrange on the upper surface of the hub 8, and simultaneously move the 3rd pin upward through the hub 24, move the guide vane upward through the plate 29 which touch it. The roller 33 arranged on the plate 30 moved with the guide vane once touch the lower surface of the hub 25 and rotate, and fit with the hollow 34 arranged on the lower surface of the hub 25, and as rotation position is fixed to each other, the guide vane 31 and the rotor 26 are unified and rotate around the rotation axis 2. However as described above, the rotation phase of the rotor 9 and the rotor 26 is released, rotation torque becomes small when wing direction and cord of the rotors 9 and 26 become parallel.
While the guide vane 16, 31 become most stable condition when leading edge turn to windward and streaming in wind. Accordingly the rotors 9, 26 and guide vane 16, 31 stop in above condition. In this condition, all cord of rotor 9, 26 and the guide vane 16, 31 are parallel to the wing direction and overall drag of wind turbine is minimum condition, and it is possible to keep safety under strong wind at maximum level, moreover as turbulence of wind become small it is possible to keep noise at minimum level. And detail explanation regarding aerodynamic brake mechanism to keep this condition is described afterward.
When the flange 12 moves downward, the guide vane 16, 31 move downward by the weight of them and recover to original condition. Effect of noise reduction with and without this guide vane16, 31 varies big by wind speed.
And abnormal intermittent noise caused by vibration noise which leeward wing generate when wind turbine is rotating including resonance generated by cord of rotor which is not parallel to wind direction when wind turbine is stopped, achieve noise reduction effect by more than 6 decibels when wind speed is more than 15 m/second.

### Embodiment 2

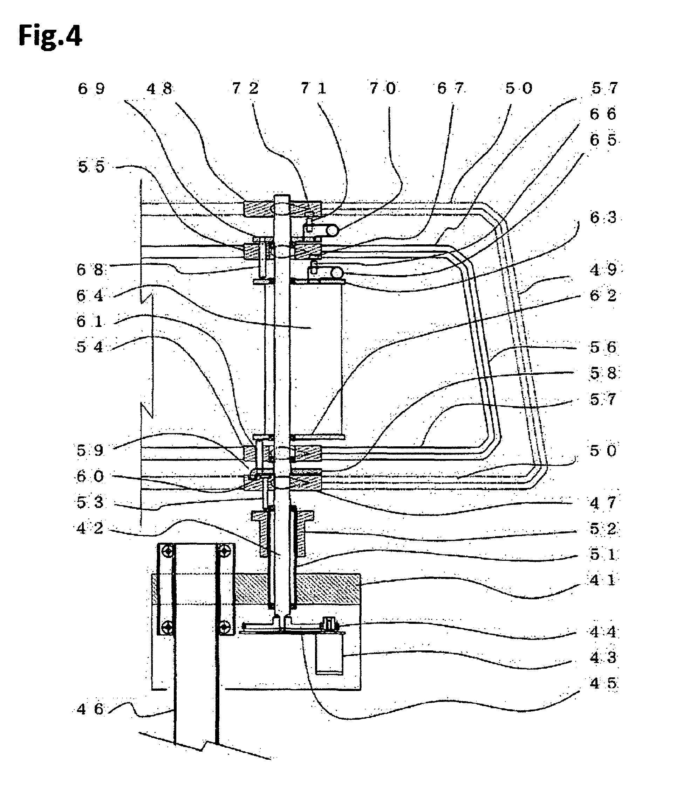

FIG.4 is the Side Section View of the 2nd embodiment of this invention. Indication of symmetrical part is abbreviated.
In FIG. 4, a rotation axis 42 which is vertical to horizon is supported by a base 41 freely for rotation, and a electric generator 43 is fixed to the base 41, and connected to the rotation axis 42 through a speed up gears 44, 45 which are lower end of the rotation axis 43. And it is preferable that the base 41 is supported by a pole-like support 46 freely for sliding upward and downward if necessary, however as it is not related to the theme of this invention, detail explanation is abbreviated. 2 hubs 47, 48 are fixed to the rotation axis 42, and 2 rotors 49 and a support arms 50 are fixed to the rotation axis 42 in substantially "U shape" condition.
And, on outer diameter of the support pipe 51 of the rotation axis 42, a flange 52, which is arranged freely to slide upward and downward, and the 1st pin 53 touch upper surface of the flange 52 through the hub 47. Hubs 54, 55 are arranged between the hubs 47, 48 freely for rotation, and the 2 rotors and support a arm 57 are fixed to the hub 54, 55 in substantially "U shape" condition. A rotor 56 and the support arm 57 which are substantially "U shape" is a little smaller than "U shape" composed of the rotor 49 and the support arm 50, and it is possible to turn around the rotation axis 42 without interference to each other. Between the hub 47 and the hub 54, a hook plate 58 is arranged to touch top of the 1st pin 53, and the hook 59, which is arranged on the edge of the hook plate 58, fit in a hollow 60 of the hub 47. In addition, a 2nd pin 61 which is fixed to the hook plate 58 and arranged to be able to slide freely upward and downward through the hub 54 is arranged.
Between the hub 54 and 55, a guide vane 64 that plates 62, 63 are fixed at top and bottom end is arranged on the rotation axis 42 freely for rotation, and freely for sliding upward and downward. The rotation center of the guide vane 64 is located at the leading edge of it, and accordingly leading edge of it always turns to windward-so-called vane effect. The rotation center of the guide vane 64 is located at the leading edge, and accordingly leading edge always turns to windward - so-called vane effect. And the guide vane 64 is the lightweight hollow or internal porous structure, and section shape of it is rounded leading edge and sharp trailing edge which is similar to wing section of aircraft. A spring 65 is fitted to the plate 63, and a roller 66 is fitted to the spring 65 freely for rotation, and when it is fitted in a hollow 67 which is arranged on the lower surface of the hub 8, it is possible to fix position of rotation when it is fitted to hollow 67 arranged in lower surface of the hub 55. And the 3rd pin 68 which touch to upper surface of the plate 63 is arranged to slide freely for sliding through the hub 55 and touch to lower surface of a plate 69. A spring 70 is fitted to the plate 69, and a roller 71 is fitted to the spring 70 freely for rotation, and when it is fitted in a hollow 72 which is arranged on the lower surface of the hub 48, it is possible to fix position of rotation when it is fitted to a hollow 72 arranged in the lower surface of hub 48. When the hollow 60 of the hub 47 and the hook 59 is fitted, phase difference of the rotor 49 and 59 is 90 degrees to each other, but when the hollow 72 of the hub 48 and the roller 71 is fitted, the rotor 49 and 56 is parallel to each other. In this condition, the roller 66 arranged on the plate 63 fit to the hollow 67 arranged on the lower surface of the hub 55, and the guide vane 64 and the rotor 49 and 56 are parallel. The 1st pin 53, the 2nd pin 61 and 3rd pin is 1 each in FIG. 4, however it is more desirable to arrange plural pins at periphery of the rotation axis 42.

The operation of second embodiment shown in FIG. 4 is almost same as first embodiment shown in FIG. 1, 2, and 3. Condition in FIG. 4 shows the rotor 49, which is fixed to the rotary axis 42 through the hub 47, 48 is rotating by the power of wind. The rotor 56 which keep 90 degrees phase difference by the hollow 60 of the hub 47 and the hook 59 of the hook plate 58, and the 2nd pin 61 which is set on the hook plate 58 and arranged freely for sliding upward and downward through the hub 54, rotate supplementing mutual uneven torque. There is no restriction of rotation for the guide vane 64, which stops rotation and is streaming in the wind.

When the flange member 52 move upward by the outside operation, the 1st pin 53 push up the hook plate 58, the hook 59 is detached from the hollow 60 and the angle relation of the rotor 49 and the 56 is released.
At the same time, the 2nd pin 61 push the lower surface of the plate 62 and push up the guide vane 64 and the roller 66 fit the hollow of 67 on the lower surface of the hub 55, then the guide vane 64 would like to rotate with the rotor 56, however by big straightening pressure of wind the guide vane 64 stops streaming in wind. The rotor 49 which was rotating by inertia of it become parallel to the rotor 56 when the roller71 fit the hollow 72 of the hub 48, finally the cords of the rotor 49 and 56 and the guide vane member 64 become parallel and stop streaming in wind. When the flange 52 move downward, recover to original condition by the weight of the guide vane 64.

Operation of this invention is described in above; substantial effect is that straightening effect of the guide vane 16, 30, 64 contribute to improvement of wind turbine performance very much. Specifically, rotation axis of conventional wind turbine stand upright in wind and section is circle, and Karman's vortex or big vortex is generated in slip stream, and when rotor pass this turbulent slip stream zone, big vibration will occur and aerodynamic performance is reduced and it become cause of noise, moreover it will affect durability of rotor and overall of wind turbine very much. As for this problem, it is said that it is the big demerit of down window type horizontal axis wind turbine, and study of the countermeasure has been continued for long time, but there has been no effective solution yet. Thick pole-like support is necessary for horizontal axis wind turbine which heavy electric power generator is installed at center of rotation, practice method is difficult but effect is big if it is possible. In this connection, coefficient of drag (C d) of circle section is about 1.0 and coefficient of drag (C d) of wing section is 0.01, the ratio is 1/100. Accordingly it is understandable that guide vane member affects to improvement of performance and noise reduction effect very much.

### Embodiment 3

Structure of the 3rd means of this invention is to provide a wind turbine device which equip with a trailing edge fin made of elastic and soft material on the trailing edge of the rotor which section is similar to wing of aircraft. A rotor itself is same as conventional structure, but a fixing point of the trailing edge fin does not form sharp edge. An elastic trailing fin installed on the trailing edge is formed of soft synthetic rubber, and fitted in a rotor and fixed by known technology as adhesion. A hollow structure is acceptable to increase flexibility.

The 3rd embodiment of above invention in the figure is explained as follows.

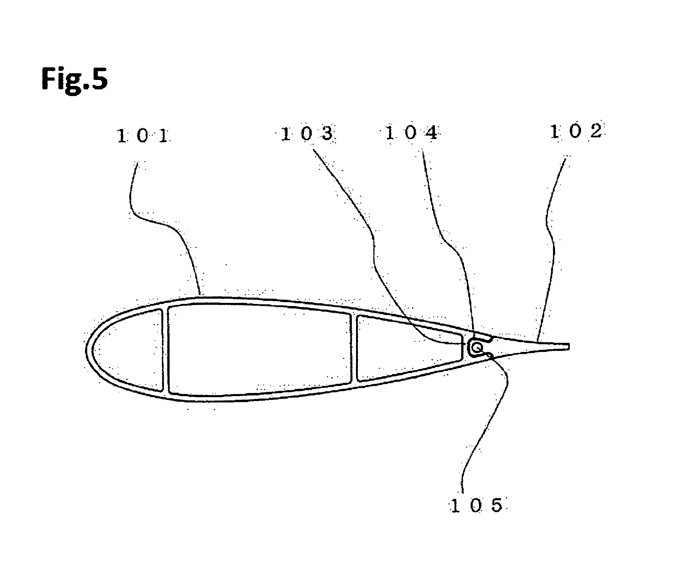

FIG. 5 is the section drawing which shows structure of 3rd embodiment of this invention.
In FIG. 5, 101 is the section of the rotor of wind turbine of this invention, which is similar to wing section of aircraft and made of hard plastics or metal, and a flexible and soft trailing fin 102 is arranged on the trailing edge of it. A groove 103 is arranged at the trailing edge of the rotor 101, and a projection 104 is formed at the front edge of the trailing edge fin 102, by inserting a bar which is not shown in the drawing into hole of the projections 104, it is possible to combine the rotor 101 and the trailing edge 102 securely. The keystone of this invention is not limited to this fixing method.
Operation of this invention is explained in FIG. 5. The rotor 101 is rotating in wind receive wind from the leading edge, and as shape of the leading edge is roundly shape in a big radius and smooth shape, airflow is not disturbed. However, when airflow move toward trailing edge direction, boundary layer become thicker and a element of turbulence is developed. Especially at the trailing edge, strong air force is added as it is generally sharp edge.
Similar theory of blowing reed of musical instrument, sometimes-big sound is generated. Theory of this invention is to prevent generation of sound by changing reed part to elastic material like rubber. And low frequency vibration is generated at trailing edge, and sometime it is transmitted to blade and noise is generated by resonance of the rotor 101, but it is possible to prevent vibration of the rotor 101 as this vibration is damped when it passes flexible and soft trailing edge 102. As for the grade of softness, it relates to material to form wing and section shape, and it is not necessary to be too soft. By this effect, it is possible to reduce noise generated by wind turbine device very much. Especially as in many cases wind turbine is used at big angle of attack, this characteristics is important, and it is confirmed in the test that noise reduction level is more than 4 decibels at wind speed 15m/s and angle of attack more than 15 degrees.

### Embodiment 4

The fourth means of this invention is to provide wind turbine which base with vertical rotation axis is fitted on pole-like support, which is possible to slide upward, and downward, pulley is installed on the upper portion of the pole-like support, and possible to slide above wind turbine base upward and downward by pulling wire hang on the pulley. In case of normal operation, use wind turbine which is pulled up to high position of pole-like support, and in a condition of extreme strong wind is blowing, down the wind turbine to the bottom of pole-like support, then it is possible to reduce influence of wind noise spreading from high position to wide range.
Generally wind speed is high at high position, and wind speed is low at low position. It is well known that small increase of wind speed cause big increase of noise. And noise source located at high position spread wide range. Noise reduction effect of this invention is if small wind turbine, there is no noise detectable at 10 meter from wind turbine. Moreover it is possible to prevent damage of wind turbine by wind and thunder.
Of course, in this case rotor is not able to rotate for interference with pole-like support, it is necessary to stop rotation of wind turbine by brake device, etc. And as it is possible to pull down wind turbine to lower position, regular maintenance and inspection are possible to do safely and very efficiently. Section of pole-like support is a circle either a square, both acceptable, however in case of circle it is desirable to prepare stopper mechanism not to rotate suddenly.

And above wind turbine device which use chain for above pull wire and arrange chain block at the lower part of pole-like support, it is possible to lift and down weight of wind turbine very easily without big force. Usually weight of small wind turbine including electric generator is several decades kilograms, and difficult to lift and down it only by hand operation. However if you use chain block it is possible to do by hand operation easily. Moreover it is needless to say that in case of big wind turbine, electric strong power device is acceptable. In case of wind turbine on the ocean or other which need maintenance operation at high place is dangerous, and substantial effect of this invention for wind turbine is very big.

Fourth means of embodiment of above invention in the figure is explained as follows.

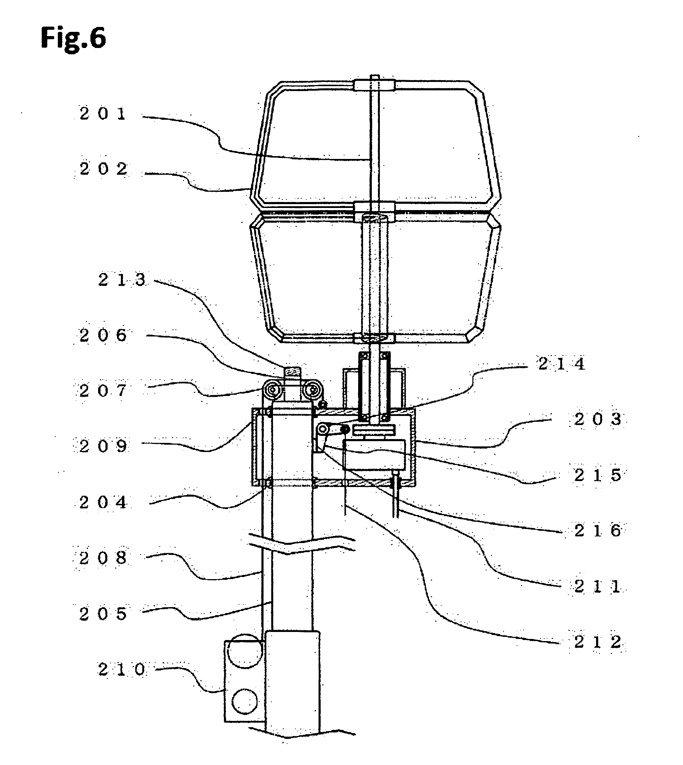

FIG. 6 is the side section drawing, which shows 4th embodiment of this invention. Partially, section drawing, which shows section shape of member, is inserted, and well-known part which do not affect keystone of this invention is simplified and indicated.
In FIG. 6, a wind turbine 202 which vertical rotation axis 201 and extrusion member which shape is wing section of aircraft is arranged, comprise of rest shape wing perpendicular to each other, a pole-like support 205 fit to hole 204 arranged on a base 203 freely for sliding upward and downward, pulleys 206, 207 are arranged at the upper position of the pole-like support 205, a pull wire 208 which is hung on the pulleys 206,207 is guided through a small hole 209 downward through the base 203.

In the case of very small wind turbine, it is possible to lift and down the wind turbine 202 by pulling the pull wire 208 manually in above condition, it is desirable to use a chain for the pull wire 208, a chain block 210 is arranged at the lower position of the pole-like support 205, and connect to the pull wire 208 to be able to wind. At the lower surface of base 203, a cable 211 from for a electric power generator and a pull wire for control 212 are pulled out. It is possible to use the cable 211 for electromagnetic brake against rotation of wind turbine by short circuit.
If rotation becomes sufficiently slow, there is no possibility of damage when the base 203 is pulled down and wind turbine contacted with the pole-like support 205, but for safety, a cushion 213 is fixed on the top of the pole-like support 205 to absorb impact by collision. It is preferable that shape of the cushion 213 is like arch which straddle the pulleys 206, 207, however it is not limited to this shape. By pulling the pull wire for control 212, rotate a lever 215 which is arranged in the base 203 freely for rotation by a shaft 214, and it is possible to fix to the base 203 with the pole-like support 205 by a pad 216 which is fixed to the other end of the lever 215 and made of elastic material-rubber, etc, contact to the pole-like support 216 strongly. To pull down the base 203, loosen the pull wire for control 212, and it becomes possible to down wind turbine by chain block 210.

In normal operation, use wind turbine, which is lifted, at high position of the pole-like support 205, and in a condition of extremely strong wind is blowing, pull down wind turbine to bottom of the pole-like support 205 to reduce influence of noise generated by wind beating the wind turbine devices at the high position of the pole-like support that travel long distance. Moreover, it is possible to prevent damage of the wind turbine from strong wind and thunder by this function. In this case, the wind turbine is not be able to rotate as it interfere with the pole-like support 205, it is necessary to slow down or stop rotation of the wind turbine by mechanical or air brake mechanism. And as it is possible to pull down the wind turbine to lower position, regular maintenance and inspection are possible to do safely and easily and very efficiently.
Section of the pole-like support is a circle either a square, both acceptable, however in case of a circle it is desirable to prepare a stopper mechanism not to rotate in an unprepared situation.

And above wind turbine device which use a chain for above the pull wire 208 and a arrange chain block at the lower part of the pole-like support 205, it is possible to lift and down weight of wind turbine 202 very easily without big force. Usually weight of small wind turbine including electricity generator is several decades kilograms, and difficult to lift and down it only by hand operation. However if you use the chain block 210, it is possible to do by hand operation easily.

Detail of power for chain block was not described yet, however it is needless to say that in case of big wind turbine, electric strong power device is acceptable. In a case of wind turbine on the ocean or other which need maintenance operation at high place is dangerous, and this invention improves safety of operation even in a case of maintenance extremely.

### Embodiment 5

The purpose of structure of 5th means of this invention is to provide vertical axis wind turbine which plural partition perpendicular to leading edge are arranged inclined to section one after the other at leading edge of rotor, and plural curved plates are arranged, so-called slats are installed in a wing thickness direction one after the other, arrange the fluid inlet which shape is shorter in the span direction and longer in the cord direction, and the fluid outlets which shape is longer in the span direction and shorter in the wing thickness direction, arrange panel member which open and close plate near the fluid outlet. By opening this plate member, it is possible to limit effect of slat and achieve very effective braking performance, and by stopping safely when strong wind is blowing, it is possible to prevent excessive rotation speed and accompanied generation of noise.

The 5th embodiment of this invention is explained in the drawing as follows.

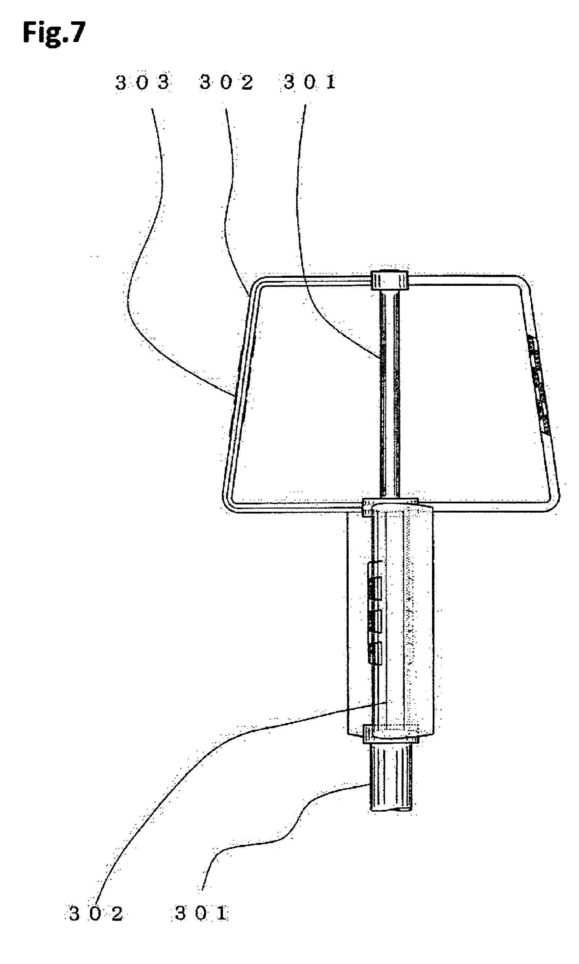

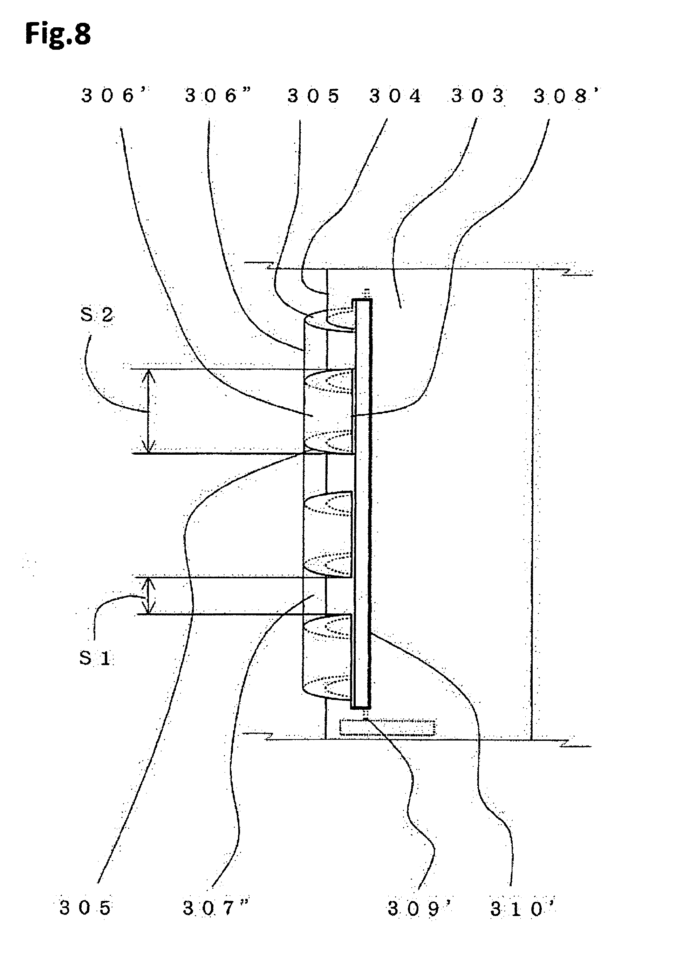

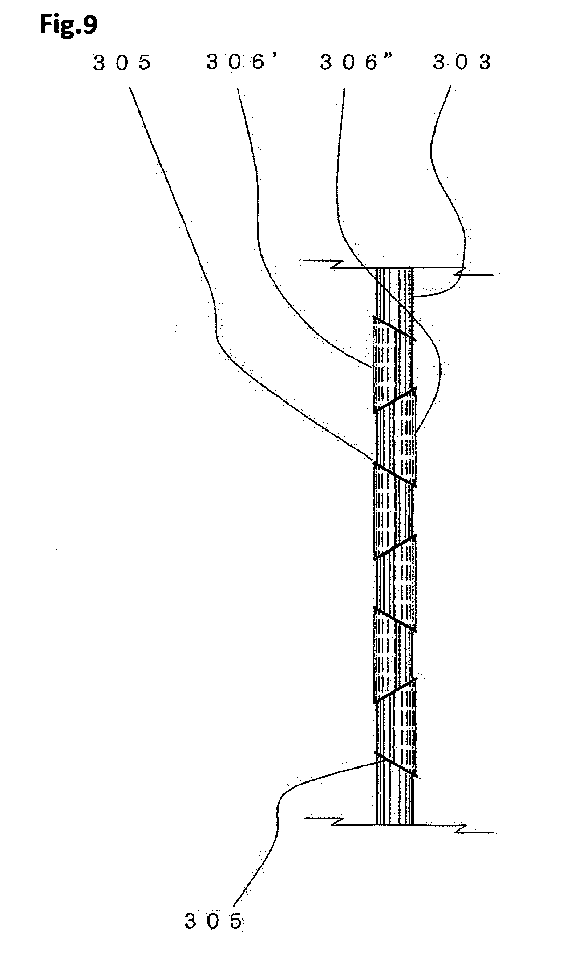

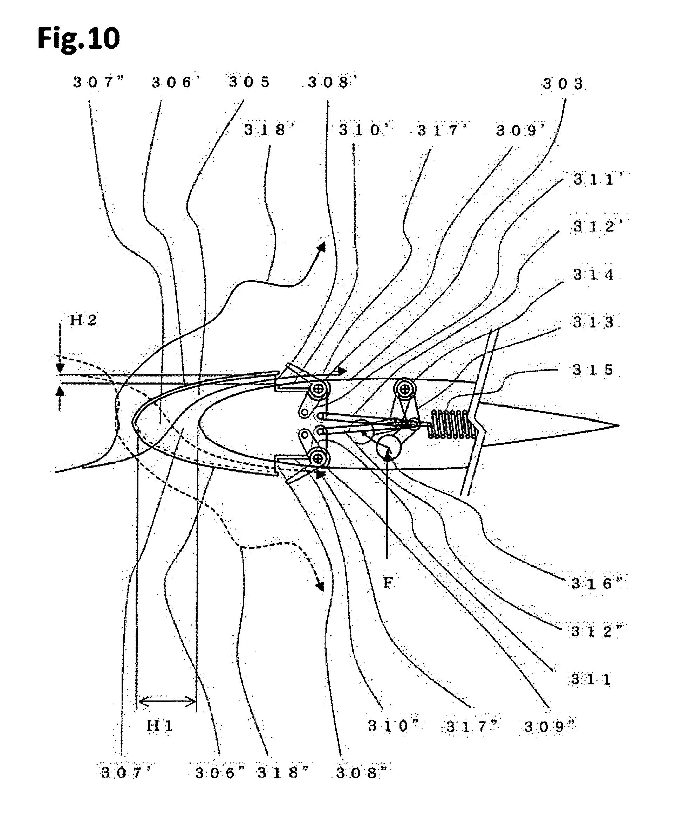

FIG. 7 is the side view, which shows structure of the 5th embodiment of this invention, FIG. 8 is a partial side view which shows shape of main part, FIG. 9 is the partial front view which shows shape of main part, FIG. 10 partial section view which shows shape of main part.
In FIG. 7, two units which two rotors 302 substantially "U shape" are arranged symmetrically are fixed to a rotor 301 by 90 degrees phase difference to each other. As shown in FIG.8, FIG. 9, FIG.10, the main part 303 of the rotor 302 has symmetrical wing section, plural partition 305 perpendicular to leading edge 304 are arranged inclined to section one after the other at leading edge 304 of the rotor 302, and plural curved plates 306', 306" are arranged, so-called slats are installed in the wing thickness direction one after the other, arrange fluid inlets 307' , 307" which shape is shorter in span direction S1 and longer in cord direction H1, and fluid outlets 308', 308" which shape is longer in span direction S2 and shorter in the wing thickness direction. Arrange the plate member 310 supported by axis 309', 309 which is parallel in the span direction of the rotors 302 near by the fluid outlet 308', 308, levers 311', 311" are fixed to axis 309', 309" in the rotor 302. Moreover, rods 312', 312" are fixed to a crank 313 at the top of lever 311', 311", and a crank 313 is supported by axis 314 freely for rotation in main part 303 of rotor 302. A weight 316 rotates the crank 313 in counter-clockwise direction. Then rods 312', 312" move in left direction and open the plate member 310', 310". It is possible to set fixing angle of the weight 315 not to close the plate member 310', 310" which once opened until rotation speed of rotor is reduced and centrifugal force is reduced to certain level. The axis 301 is connected to electric generator, etc which is not shown in the figure.

### Operation of this invention is explained in FGS. 10.

Flow lines 317', 317" in FIG.10 show flow line when panel members 310', 310" are closed state, and flow lines 318', 318" show flow line when panel members 310', 310" are open state. When the panel member 310', 310" are closed state, air flow along to the curved plate 306', 306" which form slat generate big lift, and give turning force to wind turbine device, however when the panel member 310', 310" are open state, air flow is not be able to flow along to the curved panel 306', 306" as fluid outlet is closed, and big drag is generated as air flow is separated from wing surface.
Accordingly, turning force of the wind turbine device is lost, and it is possible to stop rotation by relatively small load when strong wind is blowing. By this effect, it is possible to stop wind turbine device safely when strong wind is blowing. In this case, the purpose of the panel member 310', 310" is to close the fluid outlet 308',308", and not to cause turbulence of air flow simply. Accordingly, this operation does not generate noise, contrarily noise reduction effect caused by reduction of rotation speed is big.
Here, the open and close mechanism of the panel member to utilize centrifugal force when the rotation speed reached to excessive level is explained, however electromagnetic force, air pressure or hydraulics operation from outside is possible. However this invention does not limit this open and close mechanism.

### INDUSTRIAL APPLICABILITY

As clarified in the above explanation, the vertical axis wind turbine of this invention reduce the turbulence of the slip stream caused by the rotary axis and improve the performance of this vertical axis wind turbine, moreover when strong wind is blowing it is possible to down it to bottom of the pole-like support, and the rotation speed control of the wind turbine is easy by simple mechanism to open and close the panel member, vibration and noise reduction effect of it is very big, improve safety and easiness of maintenance and inspection, and total effect of this invention is extremely big.

### DESCRIPTION OF REFERENCE NUMERALS

- 2, 42:: rotary axis
- 9, 26, 49, 56:: rotor
- 16, 31, 64:: guide vane
- 101:: rotor
- 102:: trailing edge fin
- 201:: rotary axis
- 203:: base
- 205:: pole-like support
- 207:: pulley
- 302:: rotor
- 305:: partition
- 306', 306":: curved plate
- 307', 307":: fluid inlet
- 308', 308":: fluid outlet
- 310', 310":: plate member
- 311', 311":: lever
- 312', 312":: rod
- 313:: crank
- 314:: axis
- 315:: Spring
- 316:: weight

## Claims

1. A vertical axis wind turbine, comprising;
a rotary shaft stood on a base,
a plurality of U-shape rotors having a constant cross section supported on the rotary shaft,
wherein a guide vane having a wing cross section is supported on the rotary shaft freely for rotation.

2. The vertical axis wind turbine of claim 1, further comprising;
a connecting means located between the rotors and the guide vane,
wherein the connecting means is arranged to fix the rotation angle of the guide vane and the rotors in parallel condition.

3. The vertical axis wind turbine of claim 1, further comprising;
a trailing edge fin located at the trailing edge of the rotors, wherein the trailing edge fin is made of flexible and soft material.

4. The vertical axis wind turbine of claim 1, further comprising;
a pole-like support,
a set of pulleys installed on top of the support,
a wire hang on the pulley and fixed to the base oh the wind turbine,
wherein the wind turbine is pulling up and down by pulling the wire.

5. The vertical axis wind turbine of claim 1, further comprising;
a plurality of partition perpendicular to the leading edge of the rotors arranged inclined one after the other,
a plurality of curved plates arranged between a pair of the partitions alternately in wing thickness direction which form a slat for the wing rotor,
wherein inlet of the slat is formed shorter in span direction and longer in cord direction,
outlet of the slat is formed longer in span direction and shorter in wing thickness direction, and
a gate to open and close the outlet of the slat.
